# FASCICULE DE BREVET EUROPEEN

(11) **EP 0 540 389 B1**
(45) Date de publication et mention de la délivrance du brevet: **20.03.1996**
(21) Numéro de dépôt: 92402808.7
(22) Date de dépôt: 14.10.1992
(51) Int. Cl.: B01D 15/00, C12H 1/02

(54) **Procédé d'épuration de liquide aqueux à l'aide d'un agent d'épuration constitué de poudre de charbon actif sous enveloppe d'alcool polyvinylique et agent d'épuration correspondant**
Verfahren zum Klären einer wässrigen Flüssigkeit mittels eines Klärungsmittels bestehend aus Aktivkohlenstoffpulver unter einer Beschichtung und Polyvinylalkohol sowie entsprechendes Klärungsmittel
Process for purification of aqueous liquid by means of a purification agent comprising activated carbon powder contained in a polyvinyl alcohol bag, and corresponding purification agent

(30) Priorité: 31.10.1991 FR 9113441
(43) Date de publication de la demande: 05.05.1993
(73) Titulaire: CECA S.A., F-92800 Puteaux (FR)
(72) Inventeur: Lini, Hedi, F-95350 Saint-Brice (FR)
(74) Mandataire: Haicour, Philippe

(56) Documents cités:
- EP-A- 0 148 170
- EP-A- 0 366 231
- DATABASE WPIL Week 7846, Derwent Publications Ltd., London, GB; AN 78-82966A
- DATABASE WPIL Week 8821, Derwent Publications Ltd., London, GB; AN 88-145084
- DATABASE WPIL Week 9018, Derwent Publications Ltd., London, GB; AN 90-137402
- R.C. Bansal, J.B. Donnet, F. Stoeckli, "Active Carbon", 1988, MARCEL DEKKER, INC., New York * Pages 7-11 and 13-15*
- H. Jankowska, A. Swiatowski, Jerzy Choma, "Active Carbon", 1991, ELLIS HORWOOD LIMITED, New York * Pages 50-52 *
- CECA S.A., Fiche Technique CECA ATO "ACTICARBONE CP", 1992
- CECA S.A., Fiche Technique CECA ATO "ENO ANTICROMOS", 1993

## Description

Les charbons actifs sont des produits résultant de la carbonisation de matières carbonées diverses, bois, houille, polymères, et qui ont subi un traitement d'activation qui leur confère une forte porosité et un grand pouvoir adsorbant. On a depuis longtemps exploité cette propriété, pour la séparation ou l'épuration des gaz que pour la décoloration, l'épuration ou la désodorisation des liquides. C'est dans le domaine du traitement des liquides par les charbons actifs que se situe la présente invention.

Les applications industrielles des charbons actifs pour le traitement des liquides sont fort nombreuses et bien connues, aussi bien dans le secteur alimentaire (raffinage du sucre de betterave ou de canne, production du glucose, du lactose, traitement des vins blancs, des cidres, jus de fruits, fabrication de l'acide glutamique, de la pectine, etc...), que dans le secteur chimique (fabrication de l'acide tartrique, de la glycérine, etc...) ou celui des traitements industriels (récupération de solvants, bains de métallisation usés, dégazage des boues de forages, etc...).

Dans toutes ces applications se pose un problème de manipulation et de mise en oeuvre de ces charbons. Lorsque le traitement peut être réalisé par percolation, on fait appel à des charbons obtenus directement sous forme de bûchettes ou granulés obtenus à partir de poudre. Mais c'est la poudre parce qu'elle permet de réaliser un contact intime charbon/liquide à épurer qui en constitue la forme d'utilisation à la fois la plus simple et la plus efficace.

Les quantités de charbon utilisées, de l'ordre du kilogramme par mètre cube, ne modifient pas sensiblement la rhéologie des liquides traités, la durée de contactage est prolongeable à volonté, la séparation du charbon et du liquide épuré se fait aisément par décantation ou par filtration. Toutes les séquences où intervient le charbon mouillé ou dispersé dans le liquide se déroulent avec la plus grande facilité; en revanche, les opérations préliminaires souffrent des difficultés inhérentes à la manipulation de toute poudre sèche, en particulier celles qui tiennent à la faible densité apparente du charbon non tassé, et aussi à une certaine paresse au mouillage. On a partiellement remédié à ces inconvénients avec des charbons conditionnés sous forme de granulés délitables appelés à de défaire dès immersion; solution partiellement satisfaisante en ce sens que le granulé délitable parfait est un compromis impossible à réaliser une dispersion spontanée rapide du charbon au sein du liquide et l'absence de farinage au stockage et à la manipulation.

La présente invention remédie à cet inconvénient: elle est basée sur le conditionnement de poudre de charbon actif en unités de taille adaptée sous film d'un polymère hydrodispersible. L'utilisation des sacs solubles est déjà connue. On a ainsi utilisé des sacs d'alcool polyvinylique pour rassembler les linges sales dans les hôpitaux et de les diriger vers les machines à laver le linge sans autre contact avec le personnel; plus récemment, on a utilisé les films de même alcool polyvinylique pour constituer des dosettes de poudres détergentes pour le lavage de la lingerie ou de la vaisselle (voir par exemple les demandes de brevet japonais JP 62 004800 ou JP 01 0234900). Dans ces applications, l'emballage se dissout au contact des solutions lessivielles et sa matière est entraînée à l'égout, les dernières traces sur l'objet final, en la circonstance un linge, en étant éliminées lors des rinçages successifs. On a également préconisé l'emballage soluble pour le conditionnement des produits chimiques pour l'agriculture (voir EP 148170), auquel cas, le PVA du conditionnement se dilue dans la nature et subit probablement une dégradation biologique. Le problème est tout autre si un tel matériau intervient dans le traitement d'un liquide qu'il s'agit d'épurer et dans lequel il n'est pas question d'éliminer des impuretés en les remplaçant par d'autres, en l'occurrence, celles qui proviennent de la dissolution d'un emballage.

La demanderesse a trouvé que l'on pouvait réaliser des conditionnements de charbon actif dans des emballages solubles en alcool polyvinylique utilisables tels quels pour l'épuration de liquides aqueux sans qu'on retrouve trace de la matière d'emballage dans le liquide traité, moyennant une sélection des charbons utilisés. Il est très étonnant qu'une telle combinaison puisse être effective, car d'une part, tous les charbons ne réalisent pas l'adsorption complète du PVA à partir de ses solutions, et d'autre part, dans les conditions où l'on l'opère, il y a tout lieu de craindre que le PVA ainsi introduit n'entre en compétition avec les espèces que l'on vise à extraire.

L'invention consiste donc en un procédé d'épuration de liquides aqueux tel que défini dans la revendication 1 et en un agent d'épuration de liquides aqueux tel que défini dans la revendication 3. Certaines caractéristiques préférées sont définies dans les revendications 2 et 4.

Il existe de nombreuses qualités de charbons actifs, à commencer par les charbons que l'on dit "physiques" parce qu'ils résultent d'une activation thermique du charbon initial (bois, coque de noix de coco, houille carbonisés) en phase gaz, en l'occurrence d'une gazéification partielle en atmosphère oxydante (H₂O, CO₂, etc...) à une température de l'ordre de 900°C, et les charbons dits "chimiques" qui en diffèrent en ce que la matière première (bois, coque de noix de coco, houille) est chauffée en présence d'un agent déshydratant ou oxydant ou encore les deux à la fois (chlorure de zinc, acide phosphorique), en opérant généralement sans carbonisation préalable à une température relativement basse (inférieure à 800°C), la substance chimique étant ensuite éliminée du charbon activé par lavages successifs.

Selon les conditions opératoires, on prépare industriellement de nombreuses qualités de charbons actifs. Les textures poreuses obtenues sont très différentes et chacune d'elles est adaptée à un type particulier d'utilisation. Ces qualités se distinguent par diverses caractéristiques bien connues de l'homme de l'art, dont les plus significatives sont :
- le volume poreux;
- la surface spécifique BET;
- l'indice d'iode;
- l'indice de bleu. On rappelle rapidement ici que:
- le volume poreux est le volume total d'azote adsorbé à saturation à la température de 77°K (-196°C, température de l'azote liquide à la pression atmosphérique), mesuré selon la norme française NF X 11-621 et exprimé en cm³ par gramme de charbon ;
- la surface spécifique BET, est la surface totale accessible à l'azote à 77°K en m² par gramme de charbon; elle se mesure, comme la quantité précédente, par adsorption volumétrique d'azote à basse température, (norme française NF X II-621);
- l'indice d'iode est la quantité en gramme adsorbée par 100 grammes de charbon; il se mesure selon une méthode utilisée par la demanderesse, qui consiste à ajouter 20 ml d'une solution d'iode N/5 à 0,2 gramme de charbon sec, à agiter pendant 4 minutes, à filtrer et à doser l'iode restant dans le filtrat avec une solution de thiosulfate de sodium N/10;
- l'indice de bleu se mesure par le nombre de millilitres de solution standard de bleu de méthylène décoloré par 0,1 g de charbon actif (compté sec), selon la méthode CEFIC (Conseil Européen des Fédérations de l'Industrie Chimique) telle que décrite dans Deutsches Arzneibuch, 6^{e} édition).

Ces caractéristiques sont rapportées ci-après pour trois charbons chimiques et quatre charbons physiques, respectivement référencés comme C₁, C₂, C₃ et P₁, P₂, P₃, P₄.

| | Charbons chimiques | | | Charbons physiques | | | |
|---|---|---|---|---|---|---|---|
| Indices et caractéristiques | C1 | C2 | C3 | P1 | P2 | P3 | P4 |
| Vol poreux | 0,97 | 1,5 | 1,7 | 0,3 | 0,5 | 0,77 | 0,97 |
| S_{BET} m²/g | 1200 | 1700 | 1900 | 750 | 900 | 1150 | 1310 |
| Iode | 120 | 145 | 152 | 84 | 100 | 120 | 143 |
| Bleu | 13 | 18,5 | 20 | 5 | 9 | 12 | 19 |

Ce sont surtout les charbons chimiques tels que C₃, dont le volume poreux est supérieur à 1,5 cm³/g, préférentiellement égal ou supérieur à 1,7, la surface spécifique BET supérieure à 1700 m²/g, préférentiellement égale ou supérieure à 1900, l'indice d'iode supérieur à 145, préférentiellement égal ou supérieur à 150 et l'indice de bleu supérieur à 19, préférentiellement égal ou supérieur à 20, qui sont les charbons utiles pour l'invention.

L'alcool polyvinylique utile pour l'invention est pris sous forme d'un film d'une épaisseur de 25 à 200 micromètres, qui contient environ 8% de glycérine (glycérine codex), 9,8% d'amidon et de talc, 0,2% de cations et anions divers, le complément (82%) étant l'alcool polyvinylique.

Le PVA a été préconisé comme agent de traitement des vins, notamment pour l'amélioration des vins trop tanniques d'Arménie soviétique (voir N.B. Kazumov et coll., Prom-st., Arm., 6, 503, 1976); il est réputé ne développer aucune toxicité qui pourrait s'opposer à son utilisation dans l'industrie alimentaire ou pharmaceutique. La toxicité orale aiguë sur rats femelles est nulle (DL₅₀ > 5.000 milligrammes par kg) ; la toxicité aiguë vis à vis du cyprin doré est de même négligeable (DL₅₀ après 48 et 96 heures > 500 milligrammes par litre). Le produit en solution aqueuse à 25% n'est pas irritant vis-à-vis de la peau et des muqueuses de lapin selon le mode opératoire préconisé par l'U.S. Fédéral Food and Drugs Administration. Toutefois, tant qu'il n'est pas inscrit dans les textes légaux et réglementaires comme additif alimentaire autorisé, il ne peut pas être présent dans un produit alimentaire; n'étant pas inscrit au Code du Vin, à la Réglementation viti-vinicole communautaire et au Codex oenologique, il ne doit pas se trouver dans les vins. Et de toutes façons, il est préférable de ne pas l'introduire dans les produits que l'on entend purifier par un traitement aux charbons actifs.

Les agents d'épuration selon l'invention sont en pratique conditionnés en unités d'environ 10 grammes à environ 5 kilogrammes, constituées de poudre de charbon actif, de préférence chimique, enfermée dans des sacs thermoscellés en film de PVA. Le rapport pondéral entre l'alcool polyvinylique et le charbon actif chimique varie évidemment selon la taille des unités d'agent d'épuration et les conditions auxquelles ils seront soumis; il varie d'environ 0,1% pour les relativement grosses unités de 5 à 10 kg, à d'environ 5% pour des dosettes d'environ 10 grammes.

Les exemples qui suivent feront mieux comprendre l'invention.

### EXEMPLE 1 : Dispersion dans l'eau de divers charbons actifs conditionnés sous film de PVA.

Afin de tester la dispersion du charbon, la dissolution du PVA et l'évolution de sa concentration en fonction du type de charbon actif utilisé, on disperse dans 10 litres d'eau un petit sachet constitué par 10 grammes de charbon actif dans une poupée de film de PVA d'un poids de 100 milligrammes. On aide à la dissolution du film et à la dispersion du charbon par une agitation douce pendant 4 heures; après quoi on filtre sur verre fritté de porosité 15 à 40 µm, puis on procède au dosage colorimétrique du PVA dans le filtrat, selon la méthode décrite par Charles E. Baumgartner dans Analytic Chemistry, 1987, 56, 2716-2718. Le seuil de détection du PVA selon cette méthode est de 0,6 milligrammes par litre.

Les résultats sont les suivants:

**TABLEAU I**

| Charbon | PVA mg/l | Adsorption % |
|---|---|---|
| C2 | non mesurable | ∼ 100 % |
| C3 | non mesurable | ∼ 100 % |
| P1 | 3,6 | 64 % |
| P3 | 2,5 | 75 % |

Ils montrent qu'en utilisant des charbons chimiques tels que C₂ ou C₃ emballés sous PVA, il ne se retrouve plus de PVA détectable dans les liquides traités.

### EXEMPLE 2 : Décoloration d'un sirop de sucre

On procède à la décoloration d'un sirop de sucre dont la densité est de 1,268 et le degré Brix (grammes de sucre sec dans 100 grammes de solution) de 59,2, avec du charbon actif à raison de 10 grammes de charbon par litre de sirop.

Les charbons choisis des charbons chimiques de la qualité ordinairement utilisée en décoloration, ici référencés comme C₂ et C₃, tous deux pris soit nus, soit conditionnés en sac de PVA (1% de PVA par rapport au charbon).

Dans le tableau II qui rassemble les résultats obtenus, la colonne "décoloration" indique le pourcentage de décoloration après traitement et la colonne "PVA" le pourcentage de PVA résiduel exprimé en pourcentage de PVA introduit.

**TABLEAU II**

| Charbon | Décoloration % | PVA % |
|---|---|---|
| C₂ | 84 + 1 | - |
| C₂/PVA | 83 + 1 | 12 |
| C₃ | 98 + 1 | - |
| /PVA | 98 + 1 | non mesurable |

Ces résultats montrent que dans les conditions de l'essai, il n'y a pas de répercussion décelable du PVA sur le pouvoir décolorant des charbons chimiques.

On constate que la présence de PVA et sa co-adsorption n'ont pas d'influence sensible sur les capacités décolorantes des charbons présentés ici. Le système charbon "C₃"/PVA est tout particulièrement intéressant comme agent de décoloration puisqu'il ne laisse pas persister de PVA dans les liquides traités.

### EXEMPLE 3 : décoloration de vin blanc.

On a procédé à la décoloration d'un vin blanc du Val de Loire, taché, à l'aide de divers charbons actifs, tous utilisés au dosage de 1 gramme par litre. Dans les conditions de l'essai, la décoloration est satisfaisante avec tous les charbons utilisés, que ce soient des charbons nus ou des charbons emballés dans un film de PVA.

Le tableau III ci-après reproduit les résultats de l'analyse du PVA résiduel selon le type de charbon utilisé et les rapports pondéraux du PVA d'emballage au charbon, respectivement 1 et 2,5%, ce qui correspond à une introduction de PVA dans le vin au niveau de 10 ou 25 milligrammes par litre.

**TABLEAU III**

| Charbon | PVA introduit mg/l | PVA restant mg/l |
|---|---|---|
| C2 | 10 | 1,6 |
| C3 | 10 | non mesurable |
| | 25 | non mesurable |
| P1 | 10 | 6,0 |
| P2 | 10 | 4,7 |
| | 25 | 6,5 |
| P3 | 10 | 3,4 |
| P4 | 10 | 1,7 |
| | 25 | 1,5 |

On constate que le système charbon actif/PVA a un comportement sensiblement différent dans le vin blanc et dans l'eau: il y a très probablement compétition pour l'adsorption sur le charbon du PVA et de molécules diverses présentes dans le vin.

Le résultat global est que les charbons actifs industriels ne sont généralement pas convenables pour être utilisés dans une enveloppe de PVA soluble, mais qu'un charbon actif doué des caractéristiques du charbon C₃ est de façon inattendue véritablement convenable pour les traitements des vins blancs ou des jus sucrés.

## Revendications

1. Procédé d'épuration de liquides aqueux à l'aide d'un agent d'épuration constitué de poudre de charbon actif dans une enveloppe en film hydrosoluble d'alcool polyvinylique, procédé comprenant
- l'introduction de l'agent d'épuration et sa dispersion dans le liquide à épurer,
- le maintien en contact du liquide à épurer avec l'agent d'épuration,
- un soutirage du liquide épuré,
caractérisé en ce que, pour qu'on ne retrouve plus d'alcool polyvinylique dans le liquide épuré sinon à des doses inférieures à 0,6 milligrammes par litre, le charbon actif est un charbon chimique dont le volume poreux est supérieur à 1,5 cm³/g, dont la surface spécifique BET est supérieure à 1700 m²/g, dont l'indice d'iode est supérieur à 145 et dont l'indice de bleu est supérieur à 19, et en ce que l'alcool polyvinylique et le charbon actif chimique sont dans un rapport pondéral compris entre 0,1% et 5%.

2. Procédé selon la revendication 1 dans lequel le liquide épuré est soumis, après soutirage, à une filtration.

3. Agent d'épuration de liquides aqueux constitué d'une enveloppe scellée en film hydrosoluble d'alcool polyvinylique à l'intérieur de laquelle se trouve une poudre de charbon actif chimique dont le volume poreux est supérieur à 1,5 cm³/g, dont la surface spécifique BET est supérieure à 1700 m²/g, dont l'indice d'iode est supérieur à 145 et dont l'indice de bleu est supérieur à 19, le rapport pondéral entre l'alcool polyvinylique et le charbon chimique étant compris entre environ 0,1% et environ 5%.

4. Application de l'agent d'épuration selon la revendication 4 à l'épuration des vins blancs ou des sirops de sucre.

## Claims

1. Process for the purification of aqueous liquids using a purifying agent consisting of active charcoal powder in a wrapping made of water-soluble polyvinyl alcohol film, which process comprises
- introducing the purifying agent and dispersing it in the liquid to be purified,
- keeping the liquid to be purified in contact with the purifying agent,
- drawing off the purified liquid,
characterised in that, in order for polyvinyl alcohol no longer to be found in the purified liquid except at doses below 0.6 milligrams per litre, the active charcoal is a chemical charcoal whose pore volume is greater than 1.5 cm³/g, whose BET specific surface is greater than 1700 m²/g, whose iodine index is greater than 145 and whose blue index is greater than 19, and in that the polyvinyl alcohol and the chemical active charcoal are in a weight ratio of between 0.1% and 5%.

2. Process according to Claim 1, in which the purified liquid is subjected to filtration after drawing off.

3. Agent for the purification of aqueous liquids, consisting of a sealed wrapping made of water-soluble polyvinyl alcohol film inside which is found a chemical active charcoal powder whose pore volume is greater than 1.5 cm³/g, whose BET specific surface is greater than 1700 m²/g, whose iodine index is greater than 145 and whose blue index is greater than 19, the weight ratio between the polyvinyl alcohol and the chemical charcoal being between approximately 0.1% and approximately 5%.

4. Application of the purifying agent according to Claim 3 to the purification of white wines or sugar syrups.

## Patentansprüche

1. Verfahren zur Reinigung wäßriger Flüssigkeiten mit Hilfe eines Reinigungsreagenzes, bestehend aus Aktivkohlepulver in einer Hülle aus einem wasserlöslichen Polyvinylalkoholfilm, wobei das Verfahren die folgenden Schritte umfaßt:
- Zuführen des Reinigungsreagenzes und seine Dispersion in der zu reinigenden Flüssigkeit,
- Inkontakthalten der zu reinigenden Flüssigkeit mit dem Reinigungsreagenz,
- Abziehen der gereinigten Flüssigkeit,
dadurch gekennzeichnet, daß, damit in der gereinigten Flüssigkeit kein Polyvinylalkohol mehr vorgefunden wird außer in Mengen unterhalb von 0,6 Milligramm pro Liter, die Aktivkohle eine chemische Kohle ist, deren Porenvolumen größer als 1,5 cm³/g ist, deren spezifische BET-Oberfläche oberhalb von 1700 m²/g liegt, deren Jodzahl größer als 145 ist und deren Blauindex größer als 19 ist, und daß der Polyvinylalkohol und die chemische Aktivkohle in einem Gewichtsverhältnis zwischen 0,1 % und 5 % vorliegen.

2. Verfahren nach Anspruch 1, bei dem die gereinigte Flüssigkeit nach dem Abziehen einer Filtration unterworfen wird.

3. Reinigungsreagenz für wäßrige Flüssigkeiten, bestehend aus einer versiegelten Hülle aus einem wasserlöslichen Polyvinylalkoholfilm, in deren Inneren sich ein chemisches Aktivkohlepulver befindet, dessen Porenvolumen größer als 1,5 cm³/g ist, deren spezifische BET-Oberfläche oberhalb von 1700 m²/g liegt, deren Jodzahl größer als 145 ist und deren Blauindex oberhalb von 19 liegt, wobei das Gewichtsverhältnis von Polyvinylalkohol zu chemischer Aktivkohle zwischen etwa 0,1 % und etwa 5 % liegt.

4. Verwendung eines Reinigungsreagenzes nach Anspruch 3 zur Reinigung von Weißweinen und Zuckersirupen.
